# EUROPÄISCHE PATENTSCHRIFT

(11) **EP 0 752 433 B1**
(45) Veröffentlichungstag und Bekanntmachung des Hinweises auf die Patenterteilung: **30.05.2001**
(21) Anmeldenummer: 96110156.5
(22) Anmeldetag: 24.06.1996
(51) Int. Cl.: C08G 18/32, C08G 18/38, C08G 18/28

(54) **Einkomponenten- und Zweikomponenten-Polyurethanbeschichtungsmassen**
One-component or two-component polyurethane coating masses
Compositions de revêtement à base de polyuréthane à un ou deux composants

(30) Priorität: 01.07.1995 DE 19524046; 12.03.1996 DE 19609617
(43) Veröffentlichungstag der Anmeldung: 08.01.1997
(73) Patentinhaber: BASF Aktiengesellschaft, 67063 Ludwigshafen (DE)
(72) Erfinder: Bruchmann, Bernd, Dr., 67069 Ludwigshafen (DE); Renz, Hans, Dr., 67149 Meckenheim (DE); Mohrhardt, Günter, 67346 Speyer (DE)

(56) Entgegenhaltungen:
- EP-A- 0 028 401
- FR-A- 2 286 134
- FR-E- 52 968
- US-A- 3 849 445
- US-A- 4 204 051

## Beschreibung

Die Erfindung betrifft Einkomponenten- oder Zweikomponenten-Polyurethanbeschichtungsmassen enthaltend mindestens eine mit Polyisocyanaten reaktionsfähige Reaktivkomponente, dadurch gekennzeichnet, daß es sich bei der Reaktivkomponente um eine Verbindung A) mit einer Isocyanatgruppe, einer Urethan-, Thiourethan oder Harnstoffgruppe und zwei verkappten, mit Isocyanat reaktionsfähigen Gruppen handelt und es sich bei der Verbindung A) um das Additionsprodukt von 1 Mol Dioxolane der Formel 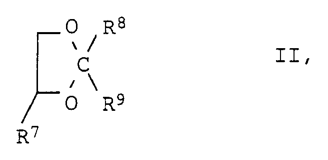 oder Dioxane der Formel 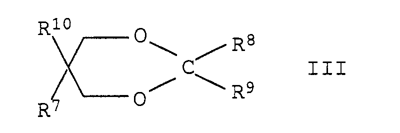 und einem Mol Diisocyanat handelt, wobei R⁸, R⁹ und R¹⁰ unabhängig voneinander für ein H-Atom oder eine C₁-C₁₀-Alkylgruppe stehen und R⁷ für einen aliphatischen oder aromatischen Rest aus 1 bis 30 Kohlenstoffatomen steht, welcher Ethergruppen im Falle des aliphatischen Rests enthalten kann, und zwingend durch eine mit Isocyanat reaktionsfähige Gruppe, z.B. eine Hydroxyl-, Mercapto- oder primäre oder sekundäre Aminogruppe substituiert ist.

Die Erfindung betrifft Polyurethanbeschichtungsmassen enthalten im allgemeinen ein Polyisocyanat und eine mit Isocyanat reaktionsfähige Komponente, z.B. ein Polyol. Zur Einstellung der notwendigen Verarbeitungsviskosität enthalten die Beschichtungsmassen üblicherweise ein organisches Lösemittel. Gewünscht ist jedoch ein möglichst geringer Bedarf an Lösemittel. Um dies zu erreichen, sollen die Beschichtungsmassen bereits ohne Lösemittel bzw. bei geringen Lösemittelmengen, d.h. hohen Feststoffgehalten, eine möglichst geringe Viskosität aufweisen. Dieser Effekt kann z.B. dadurch erreicht werden, daß man sogenannte Reaktivverdünner zusetzt, die die Viskosität erniedrigen und anschließend im System abreagieren.

Aus der EP-A-403 921 sind z.B. Polyasparaginsäurederivate als Reaktivverdünner bekannt. Diese Verbindungen enthalten sekundäre Aminogruppen, welche mit den Isocyanatgruppen der Polyisocyanate zu Harnstoffgruppen reagieren. Nachteilig bei den bisher bekannten Reaktivverdünnern ist insbesondere, daß der Gehalt an Polyisocyanat in der Beschichtungsmasse stark erhöht werden muß, um den notwendigen vollständigen Umsatz mit den Reaktivverdünnern zu erreichen. Die Kosten der Beschichtungsmasse hängen wesentlich vom Polyisocyanat als Wertkomponente ab.

Aus der GB 14 63 944 sind Additionsprodukte von Oxazolidinderivaten und Diisocyanaten als solche bekannt. Die Verwendung dieser Additionsprodukte in Beschichtungsmassen wird in FR-A-2286134 und EP-A-28401 beschrieben.

Aufgabe der vorliegenden Erfindungen waren daher Polyurethanbeschichtungsmassen, welche bei hohen Feststoffgehalten eine niedrige Viskosität aufweisen. Aufgabe der Erfindung waren auch Reaktivkomponenten bzw. Reaktivverdünner für Zweikomponenten-Polyurethanbeschichtungsmassen.

Demgemäß wurden die eingangs definierten Polyurethanbeschichtungsmassen gefunden. Ebenso wurden geeignete Reaktivkomponenten bzw. Reaktivverdünner für Einkomponenten- und Zweikomponenten-Polyurethanbeschichtungsmassen gefunden.

Die weiteren Ausführungen betreffen bevorzugte Ausführungsformen der Erfindung.

Bevorzugt handelt es sich bei der Verbindung A) um eine niedermolekulare Verbindung mit einem Molgewicht unter 2000 g/mol, insbesondere unter 1000 g/mol und besonders bevorzugt unter 500 g/mol.

Die Verbindung A) enthält dann genau eine Urethangruppe (Umsetzung einer Hydroxylgruppe mit Isocyanat), eine Thiourethangruppe (Umsetzung einer Mercaptogruppe mit einem Isocyanat) oder eine Harnstoffgruppe (Umsetzung einer primären oder sekundären Aminogruppe mit Isocyanat), genau eine Isocyanatgruppe und genau zwei blockierte, mit Isocyanat reaktive Gruppen.

Die Diisocyanate bestehen, abgesehen von den Isocyanatgruppen, vorzugsweise ausschließlich aus Kohlenstoff und Wasserstoff.

Genannt seien geradkettige oder verzweigte C₄-C₁₄-Alkylendiisocyanate, z.B. Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat) oder 2,4- oder 2,6-Diisocyanato-1-methylcyclohexan, aromatische Diisocyanate wie 2,4-Diisocyanatotoluol, 2,6-Diisocyanatotoluol, 1,4-Diisocyanatobenzol, 4,4'- und 2,4'-Diisocyanatodiphenylmethan, p-Xylylendiisocyanat, sowie 1,5-Naphthylendiisocyanat oder die aromatisch substituierten Isocyanate wie Tetramethylxylylendiisocyanat und Isopropenyldimethyltoluylendiisocyanat.

Bevorzugte Verbindungen A) sind z.B. die Additionsprodukte der vorstehenden Diisocyanate, insbesondere Hexamethylendiisocyanat, Isophorondiisocyanat, 4,4'-Di(isocyanatocyclohexyl)methan, Tetramethylxylylendiisocyanat, 2,4-Toluylendiisocyanat, 2,6-Toluylendiisocyanat, 4,4'-Diphenylmethandiisocyanat oder Mischungen der genannten Isocyanate, an Dioxolane der Formel 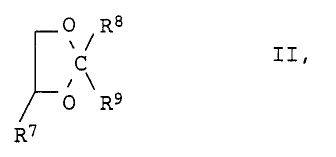 oder Dioxane der Formel 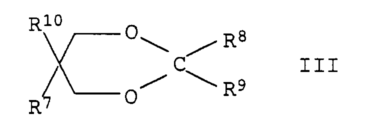 wobei
- R⁸, R⁹ und R¹⁰: unabhängig voneinander für ein H-Atom oder eine C₁-C₁₀-Alkylgruppe, vorzugsweise eine C₁-C₄-Alkylgruppe, R⁸ und R⁹ besonders bevorzugt für ein H-Atom oder eine Methylgruppe und R¹⁰ besonders bevorzugt für eine Ethylgruppe stehen und R⁷ die Bedeutung eines aliphatischen oder aromatischen Rests mit 1 bis 30 C-Atomen, vorzugsweise einer aromatischen Gruppe mit 5 bis 10 C-Atomen und einer, gegebenenfalls durch Ethergruppen unterbrochenen aliphatischen Gruppe mit 1 bis 20 C-Atomen, welcher zwingend durch eine Hydroxylgruppe, Mercaptogruppe oder eine primäre Aminogruppe substituiert ist oder zwingend eine sekundäre Aminogruppe enthält.

Besonders bevorzugt steht R⁷ für eine C₁-C₈-verzweigte oder lineare Kohlenwasserstoffkette, welche durch eine Hydroxylgruppe oder eine primäre Aminogruppe substituiert ist.

Die erfindungsgemäße Zweikomponenten-Polyurethanbeschichtungsmasse kann Verbindungen A) als einzige gegenüber Isocyanat reaktionsfähigen Reaktivkomponente enthalten, da die Verbindung A) neben einer Isocyanatgruppe zwei blockierte, mit Isocyanat reaktive Gruppen (Gruppen X und Y in Formel I) enthält.

Die Blockierungsmittel werden aus der Verbindung A) bei der späteren Anwendung durch Einwirkung von Luftfeuchtigkeit freigesetzt, so daß die vorher blockierten Gruppen dann in ihrer reaktionsfähigen Form, als Hydroxyl-, Mercapto oder primäre bzw. sekundäre Aminogruppe vorliegen.

Die erfindungsgemäße Polyurethanbeschichtungsmasse kann neben Verbindungen A) weitere mit Isocyanat reaktionsfähige Reaktivkomponenten (im folgenden kurz Reaktivkomponenten genannt) enthalten.

Der Anteil der Verbindungen A) beträgt vorzugsweise 1 bis 100 Gew.-%, bezogen auf die Reaktivkomponenten.

Besonders hoch ist die durch Verbindungen A) erreichbare Viskositätserniedrigung der Beschichtungsmasse bei einem Gehalt von 5 bis 100, besonders bevorzugt 20 bis 100 Gew.-% und ganz besonders bevorzugt 50 bis 100 Gew.-% der Verbindungen A), bezogen auf die Gesamtmenge der Reaktivkomponenten.

Als weitere Reaktivkomponenten seien z.B. hydroxyfunktionelle Polymere (radikalisch polymerisiert), Polykondensate oder Polyaddukte genannt.

Bei den hydroxyfunktionellen Polymeren handelt es sich z.B. um Polymere mit einem Gehalt an Hydroxylgruppen von 0,1 bis 20, vorzugsweise 0,5 bis 10 Gew.-%. Das zahlenmittlere Molekulargewicht Mₙ der Polymeren beträgt vorzugsweise 1000 bis 100 000, besonders bevorzugt 2000 bis 10 000. Bei den Polymeren handelt es sich bevorzugt um solche, welche zu mehr als 50 Gew.-% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt die Polymeren zu mehr als 60 Gew.-% aus C₁-C₁₀-Alkyl(meth)acrylaten, Styrol oder deren Mischungen.

Darüber hinaus enthalten die Polymeren hydroxyfunktionelle Monomere entsprechend dem obigen Hydroxylgruppengehalt und gegebenenfalls weitere Monomere, z.B. ethylenisch ungesättigte Säuren, insbesondere Carbonsäuren, Säureanhydride oder Säureamide.

Weitere Reaktivkomponenten sind z.B. Polyesterole, wie sie durch Kondensation von Polycarbonsäuren, insbesondere Dicarbonsäuren mit Polyolen, insbesondere Diolen erhältlich sind.

Weiterhin sind als Reaktivkomponente auch Polyetherole geeignet, die durch Addition von Ethylenoxid, Propylenoxid oder Butylenoxid aus H-aktive Komponenten hergestellt werden. Ebenso sind Polykondensate aus Butandiol geeignet.

Bei den Reaktivkomponenten kann es sich natürlich auch um Verbindungen mit primären oder sekundären Aminogruppen handeln.

Genannt seien z.B. sogenannte Jeffamine, d.h. mit Aminogruppen terminierte Polyetherole, oder Oxazolidine.

Bei Einkomponenten-Polyurethanbeschichtungsmassen liegt einer der Reaktionspartner (Isocyanat oder mit Isocyanat reaktive Verbindung) vollständig in blockierter, d.h. nicht reaktiver Form, vor.

Die erfindungsgemäßen Einkomponenten-Polyurethanbeschichtungsmassen enthalten daher lediglich Reaktivkomponenten mit blockierten, gegenüber Isocyanat reaktiven Gruppen. Neben den Verbindungen A können auch andere Reaktivkomponenten mit blockierten, gegenüber Isocyanat reaktiven Gruppen Verwendung finden, z.B. Aldimine, Ketimine, Oxazolidine

Im allgemeinen enthalten die erfindungsgemäßen Einkomponenten Polyurethanbeschichtungsmassen 50 bis 100 Gew.-%, bevorzugt 70 bis 100 Gew.-% und besonders bevorzugt ausschließlich Verbindungen A) als Reaktivkomponente mit blockierten, gegenüber Isocyanat reaktiven Gruppen.

Ein Mischen der Polyisocyanate mit den Reaktivkomponenten kurz vor der Verarbeitung, entfällt.

Die Einkomponenten-Polyurethanbeschichtungsmassen enthalten Polyisocyanate und die Reaktivkomponente mit blockierten, gegenüber Isocyanat reaktiven Gruppen und sind lagerstabil.

Zweikomponenten-Polyurethanbeschichtungsmassen enthalten zumindest noch eine der oben stehenden Reaktivkomponenten mit freien, gegenüber Isocyanat reaktiven Gruppen. Diese Reaktivkomponente wird im allgemeinen kurz vor der Verarbeitung mit den anderen Polyisocyanaten und Verbindungen A) gemischt (daher 2-Komponenten).

Die erfindungsgemäßen Polyurethanbeschichtungsmassen enthalten neben den Reaktivkomponenten, wie bereits dem voranstehenden zu entnehmen, mindestens eine mit diesen Reaktivkomponenten reaktionsfähige Komponente, insbesondere Polyisocyanate.

Als Polyisocyanat genannt seien z.B. übliche Diisocyanate und/ oder übliche höher funktionelle Polyisocyanate mit einer mittleren NCO-Funktionalität von 2,0 bis 4,5. Diese Komponenten können allein oder im Gemisch vorliegen.

Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl) methan, 1-Isocyanato-3,3,5- trimethyl-5-(isocyanatomethyl)cyclohexan(Isophorondiisocyanat) oder 2,4-, oder 2,6-Diisocyanato-1-methylcyclohexan sowie aromatische Diisocyanate wie 2,4- oder 2,6-Toluylendiisocyanat, p-Xylylendiisocyanat, 2,4'- oder 4,4'-Diisocyanatodiphenylmethan, 1,3- oder 1,4-Phenylendiisocyanat, 1-Chlor-2,4-phenylendiisocyanat, 1,5-Naphthylendiisocyanat, Tetramethylxylylendiisocyanat, Diphenylen-4,4'-diisocyanat, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen. Bevorzugt sind Hexamethylendiisocyanat und Isophorondiisocyanat, sowie 2,4- und 2,6-Toluylendiisocyanat und 2,4'- und 4,4'-Diphenylmethandiisocyanat.

Als übliche höher funktionelle Polyisocyanate eignen sich beispielsweise Triisocyanate wie 2,4,6-Triisocyanatotoluol oder 2,4,4'-Triisocyanatodiphenylether oder die Gemische aus Di-, Tri- und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Von besonderem Interesse sind übliche aliphatische höherfunktionelle Polyisocyanate der folgenden Gruppen:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiongruppen enthaltende Diisocyanate mit aromatisch, aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.
(c) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 10 bis 30 Gew.-%, insbesondere von 18 bis 25 Gew.-% und eine mittlere NCO-Funktionalität von 3 bis 4,5 auf.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
(e) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
(f) Carbodiimid- oder Uretonimin-modifizierte Polyisocyanate.

Die Isocyanatgruppen der obigen Polyisocyanate a) - - f) können auch teilweise mit Monoalkoholen umgesetzt sein.

Aliphatische und cycloaliphatische Polyisocyanate sind besonders bevorzugt. Ganz besonders bevorzugt sind Hexamethylendiisocyanat und Isophorondiisocyanat und insbesondere deren Isocyanurate und Biurete.

Die erfindungsgemäßen Beschichtungsmassen enthalten die Polyisocyanate und die Reaktivkomponente (also Verbindung A und gegebenenfalls weitere mit Isocyanat reaktive Verbindungen) im allgemeinen in solchen Mengen, daß, bezogen auf 1 Mol, insgesamt vorhandener Isocyanatgruppen, 0,8 bis 1,2 Mol mit Isocyanat reaktiver Gruppen, sowohl freier als auch blockierter Gruppen, vorhanden sind. Besonders bevorzugt beträgt das Molverhältnis ca. 1 : 1.

Die Polyisocyanate sowohl in den Einkomponenten- als auch Zweikomponentensystemen können jedoch ganz oder teilweise durch andere mit der oder den Reaktivkomponenten reaktionsfähige Verbindungen ersetzt sein. In Betracht kommen z.B. Polyepoxide, Verbindungen mit Säureanhydridgruppen oder N-Methylolgruppen bzw. veretherte N-Methylolgruppen enthaltende Verbindungen, z.B. Harnstoff- oder Melaminharze, welche mit den Gruppen X und Y der Verbindung A) reagieren können.

Die erfindungsgemäßen Beschichtungsmassen können weiterhin noch organische Lösemittel, z.B. Xylol, Butylacetat, Methylisobutylketon, Methoxypropylacetat, N-Methylpyrrolidon enthalten. Mit Lösemittel wird die zur Verarbeitung, d.h. zum Auftragen auf Substrate gewünschte niedrige Viskosität der Beschichtungsmasse eingestellt. Durch die Verbindung A) wird dazu deutlich weniger Lösemittel benötigt, d.h. die gewünschte niedrigere Viskosität wird bei höheren Festgehalten erreicht.

Die Beschichtungsmassen können natürlich weitere, in der Beschichtungstechnologie übliche Zusatzstoffe, z.B. Pigmente, Füllstoffe, Verlaufshilfsmittel etc. enthalten.

Sie können weiterhin Katalysatoren für die Urethanbildung, z.B. Dibutylzinndilaurat, enthalten.

Zur Herstellung der erfindungsgemäßen Beschichtungsmassen können die einzelnen Bestandteile in bekannter Weise miteinander vermischt werden. Die Verbindungen A) und gegebenenfalls weitere Reaktivkomponenten mit blockierten, gegenüber Isocyanat reaktiven Gruppen können lange vor der Verarbeitung mit den Polyisocyanaten gemischt werden (1-K-System). Reaktivkomponenten mit freien, mit Isocyanat reaktiven Gruppen werden den Isocyanat im allgemeinen erst kurz vor der Verarbeitung zugesetzt (2-K-Systeme). Mit Lösemittel kann die gewünschte Viskosität eingestellt werden. Die Beschichtungsmasse kann in üblicher Weise durch Spritzen, Gießen, Walzen, Streichen, Rakeln etc. auf Substrate, aufgebracht werden. Die Beschichtungsmasse eignet sich insbesondere für Substrate wie metallische Untergründe, Holz bzw. Holzwerkstoffe, Kunststoffe etc.

Unter Einfluß von Luftfeuchtigkeit werden die blockierten mit Isocyanat reaktiven Gruppen der Verbindung A) freigesetzt. Danach verläuft die Reaktion der Verbindungen A) mit den Polyisocyanaten bei Raumtemperatur in bekannter Weise.

Die erhaltenen Beschichtungen haben sehr gute mechanische Eigenschaften, insbesondere eine hohe Härte, Flexibilität und Chemikalienbeständigkeit.

### Beispiele

Die hydroxyfunktionellen Ausgangsverbindungen (Strukturformeln (1) bis (5) für die Verbindungen A) sind in Tabelle 1 aufgelistet und werden gemäß den angegebenen Arbeitsvorschriften (AV) hergestellt bzw. von der angegebenen Firma erworben.

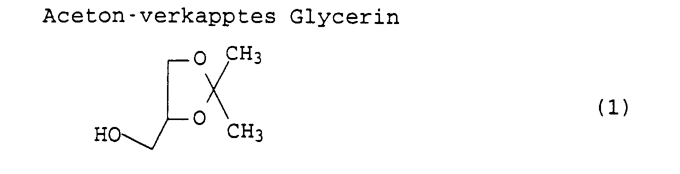

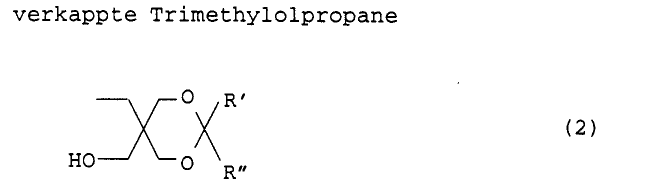

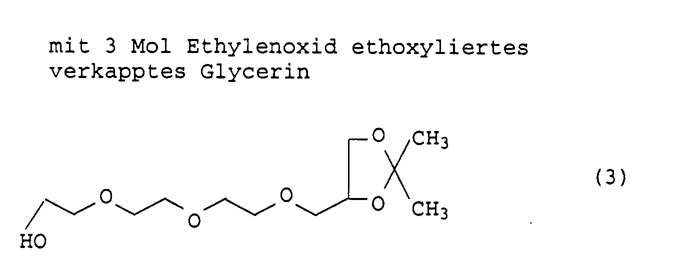

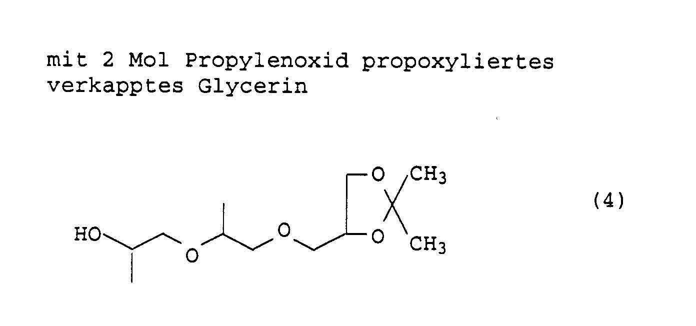

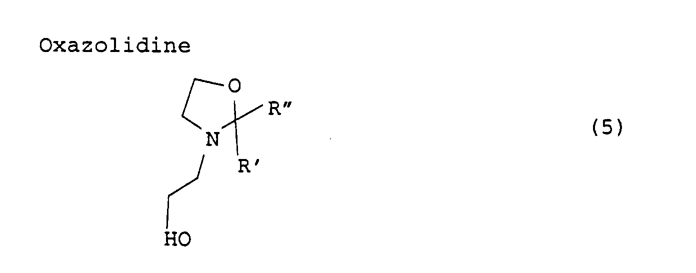

**Tabelle 1:**

| Hydroxyfunktionelle Ausgangsverbindungen | | | |
|---|---|---|---|
| Nr. | R' | R" | Herstellung |
| (1) | - | - | Fluka AG |
| (2a) | H | H | Perstorp Polyols |
| (2b) | CH₃ | CH₃ | AV1 |
| (2c) | CH₃ | C₂H₅ | AV1 |
| (2d) | CH3 | i-C₄H₉ | AV1 |
| (3) | - | - | AV2 |
| (4) | - | - | AV2 |
| (5a) | H | H | US 3,037,006 |
| (5b) | H | i-C₃H₇ | DE-OS 22 45 636 |

### AV 1:

### Herstellung der verkappten Trimethylolpropan-Derivate

250 g Trimethylolpropan werden zusammen mit 750 ml Petrolether (Siedebereich 30-75°C), 750 ml des entsprechenden Ketons und 0,15 g p-Toluolsulfonsäure-Monohydrat 24 h am Rückfluß erhitzt. Danach wird über einen Wasserabscheider das entstandene Reaktionswasser ausgekreist. Die Lösung wird abgekühlt, 0,5 g Natriummethanolat zugegeben und 1 h bei Raumtemperatur gerührt. Die Lösung wird filtriert, das Lösungsmittel am Rotationsverdampfer entfernt und der Rückstand im Vakuum destilliert.

| | | |
|---|---|---|
| 2b | Ausb. 78 % d. Theor., Siedep. | 71-72°C (0,5 mbar) |
| 2c | Ausb. 84 % d. Theor., Siedep. | 89°C (0,3 mbar) |
| 2d | Ausb. 83 % d. Theor., Siedep. | 96°C (0,3 mbar) |

### AV 2:

### Herstellung der alkoxylierten Isopropylidenglycerin-Derivate

In einem 5 l-Reaktor, geeignet zur Herstellung von Polyetherolen, werden 1060 g (8 mol) Isopropylidenglycerin (1) vorgelegt, 4 g Kalium-tert.-butylat zugefügt und auf 110°C erhitzt. Bei dieser Temperatur werden 24 mol Ethylenoxid bzw. 16 mol Propylenoxid zugegeben. Die Reaktion wird weitergeführt bis zur Druckkonstanz. Anschließend wird für 30 min Vakuum angelegt. Nach der Entmonomerisierung wird mit Stickstoff belüftet, auf 50°C abgekühlt und das Produkt abgelassen. Die Aufarbeitung zur Entfernung des Alkali erfolgt durch Zugabe von 3 Gew.-% eines Mg-Silikats (Ambusol, Kationenaustauscher) und erhitzen für 2 h auf 100°C. Das Silikat wird abfiltriert und das Endprodukt mit 0,15 Gew.-% 2,6-Di-tert.-butyl-p-kresol (Kerobit TBK) stabilisiert.
- 3:: OH-Zahl = 216 mg KOH/g.
- 4:: OH-Zahl = 219 mg KOH/g.

### Herstellung der Verbindungen A)

Die Verbindungen A wurden durch Umsetzung der vorstehenden hydroxyfunktionellen Ausgangsverbindungen mit Diisocyanaten gemäß den Arbeitsvorschriften AV 3, AV 4 und AV 5 hergestellt. Die erhaltenen Verbindungen werden gemäß den Ausgangskomponenten benannt, z.B. IPDI-1 für Verbindung A) aus IPDI und 1 und sind in Tabelle 2 aufgelistet.

**Tabelle 2**

| Verbindungen A (Monourethane) | | | | | |
|---|---|---|---|---|---|
| Nr. | Verbindung | NCO theor. (%) | NCO gemessen (%) | Visk. (mPas) | Herstellung |
| 1 | IPDI-1 | 11,9 | 11,8 | 1378 (50°C) | AV3 |
| 2 | IPDI-2a | 11,4 | 10,7 | >10000 (50°C) | AV3 |
| 3 | IPDI-2b | 10,6 | 10,6 | >10000 (50°C) | AV3 |
| 4 | IPDI-2c | 10,2 | 9,8 | >10000 (50°C) | AV3 |
| 5 | IPDI-2d | 9,6 | 8,9 | >10000 (50°C) | AV3 |
| 6 | IPDI-5a | 12,1 | 10,7 | 1800 (50°C) | AV3 |
| 7 | IPDI-5b | 10,8 | 10,5 | 870 (50°C) | AV3 |
| 8 | HDI-1 | 14,0 | 13,7 | 174 (25°C) | AV4 |
| 9 | HDI-2b | 12,3 | 11,9 | 1690 (25°C) | AV4 |
| 10 | HDI-2d | 10,9 | 10,6 | 1370 (25°C) | AV4 |
| 11 | HDI-3 | 9,8 | 8,6 | 500 (25°C) | AV4 |
| 12 | HDI-4 | 9,9 | 9,3 | 250 (25°C) | AV4 |
| 13 | HDI-5b | 12,6 | 12,8 | 302 (25°C) | AV4 |
| 14 | IPCI-2b | 11,0 | 10,9 | 780 (50°C) | AV3 |
| 15 | BEPDI-1 | 11,4 | 11,1 | 2420 (25°C) | AV3 |
| 16 | BEPDI-2b | 10,2 | 9,6 | >10000 (25°C) | AV3 |
| 17 | 2,4-TDI-1 | 13,7 | 12,9 | 1200 (50°C) | AV5 |
| 18 | 4,4'-MDI-1 | 11,0 | 10,3 | 2700 (50°C) | AV5 |
| IPDI: Isophorondiisocyanat HDI: Hexamethylendiisocyanat BEPDI: 2-Butyl-2-ethyl-pentamethylendiisocyanat 2,4-TDI 2,4-Toluylendiisocyanat 4,4'-MDI: 4,4'-Diphenylmethandiisocyanat IPCI: 2-Isocyanatopropylcyclohexylisocyanat | | | | | |

### AV 3:

### Monourethane aus IPDI, IPCI oder BEPDI

Das aliphatische Diisocyanat und 200 ppm Dibutylzinndilaurat werden unter Stickstoffbedeckung vorgelegt, auf 80°C, bei IPCI 50°C, aufgeheizt und die OH-Komponente bei dieser Temperatur innerhalb 30 min zugetropft. Anschließend läßt man 60 min bei 80°C (IPCI 50°C) nachreagieren. Das Molverhältnis zwischen Isocyanat und OH-Komponente beträgt 1 : 1, als Nebenprodukt tritt neben dem monomeren Isocyanat (3-6 %) das Diurethan auf. Die Ausbeuten an Monourethan sind aufgrund der 1 : 1-Fahrweise naturgemäß geringer als die der HDI-Produkte.

### AV 4:

### Monourethane aus HDI

1680 g HDI (10 mol) und 0,84 g Dibutylzinndilaurat (500 ppm bez. HDI) werden unter Stickstoffbedeckung vorgelegt und auf 50°C erwärmt. Bei dieser Temperatur werden innerhalb 30 min 2 mol der OH-Komponente zugetropft. Man läßt 30 min bei 50°C nachreagieren. Anschließend wird das Produkt durch Destillation am Dünnschichtverdampfer bei 165°C (Öltemperatur) und 2,5 mbar von monomerem HDI befreit. Der Restmonomerengehalt des Endproduktes liegt unter 0,2 %. Kennzeichnend für diese "Unterschuß-Fahrweise" ist die hohe Ausbeute an Monourethan (> 85 %).

### AV 5:

### Monourethane aus den aromatischen Diisocyanaten TDI und MDI

Das aromatische Diisocyanat wird unter Stickstoffbedeckung vorgelegt, auf 80°C aufgeheizt und die OH-Komponente bei dieser Temperatur innerhalb 30 min zugetropft. Anschließend läßt man 60 min bei 80°C nachreagieren. Das Molverhältnis zwischen Isocyanat und OH-Komponente beträgt 1 : 1, als Nebenprodukt tritt neben dem monomeren Isocyanat (TDI 4 %, da selektiver durch unterschiedlich reaktive NCO-Gruppen, MDI 13 %) das Diurethan auf.

### Herstellung und Prüfung der Klarlacke mit Verbindungen A

### 2-Komponentensystem

Die Verbindungen A) wurden mit dem hydroxifunktionellen Vinylpolymerisat Lumitol® H 136, BASF sowie dem Polyisocyanat Basonat® HI 100, BASF in äquimolaren Mengen der Isocyanatgruppen zu mit Isocyanat reaktiven (blockierte und nichtblockierte) Gruppen gemäß Tabelle 3 gemischt und zur Beschleunigung der Aushärtung mit Dibutylzinndilaurat (DBTL, Merck) katalysiert.

Zum Vergleich wurde in Klarlack 1 keine Verbindung A) verwendet und in Klarlack 2 ein Bisoxazolidin als kommerziell erhältlicher Reaktivverdünner eingesetzt. Die Einstellung auf eine Applikationsviskosität von 20 s (DIN 53 211 Becher 4 mm Auslaufdüse) erfolgte mit Butylacetat. Die Festgehalte wurden nach DIN V 53 216 1. Teil bestimmt.

Mit einem Filmziehrahmen wurden auf Glasplatten Beschichtungen mit einer Naßfilmdicke von 200 µm aufgetragen. Die so erhaltenen Klarlacke wurde 7 Tage unter Normklima gehärtet. Die resultierende Härte der Lacke wurde mittels Pendeldämpfungsmessung nach König (DIN 53 157) bestimmt.

Die erhaltenen Lackeigenschaften sind in Tabelle 3 zusammengefaßt.

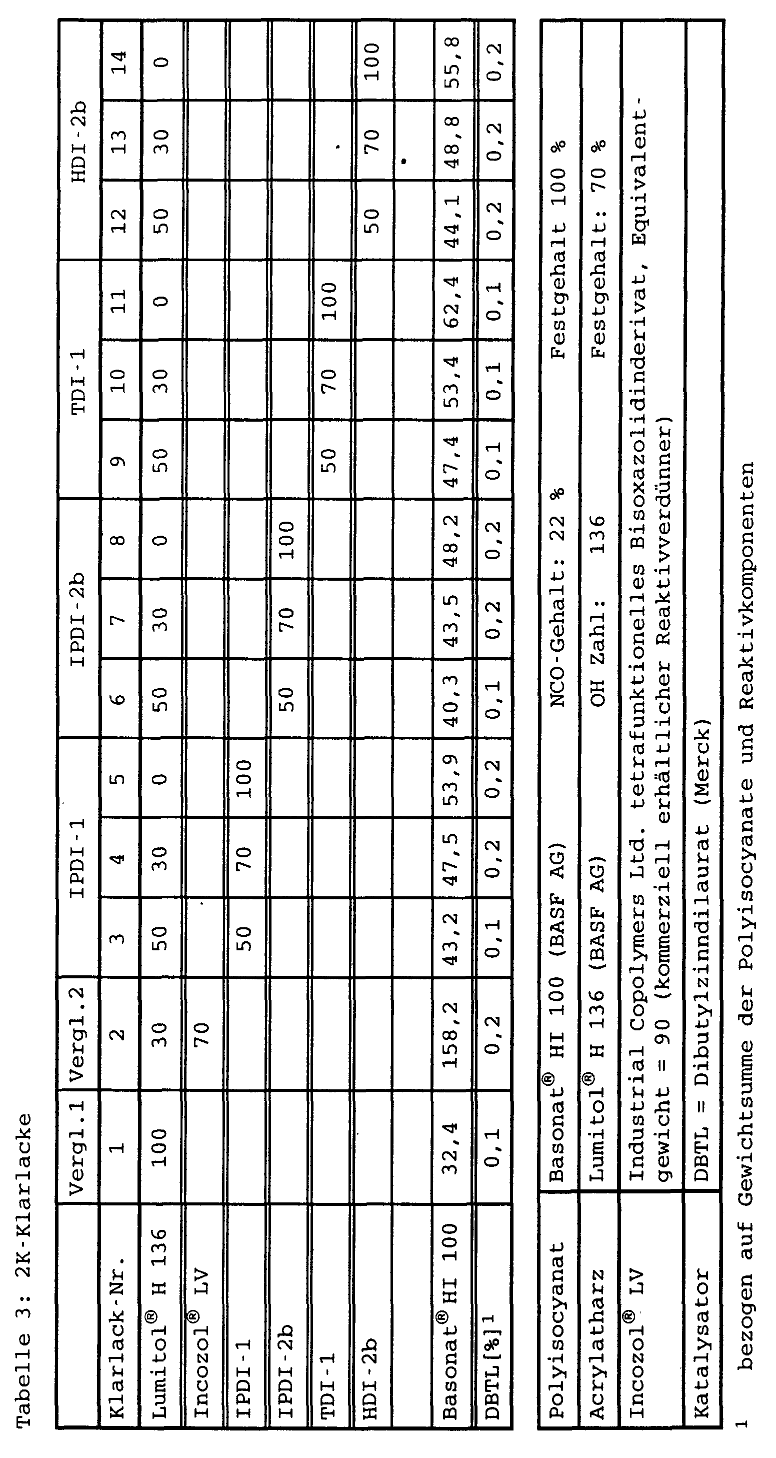

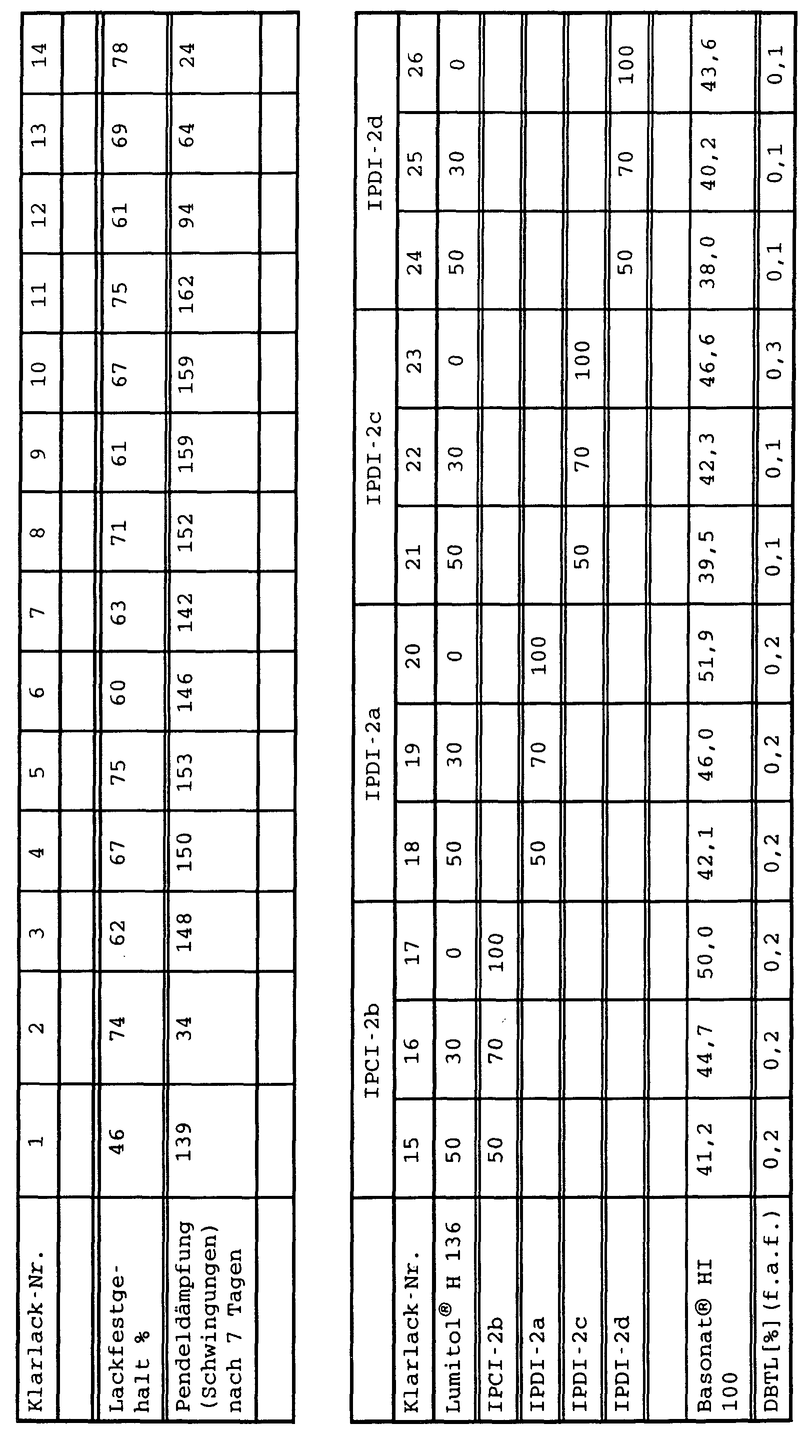

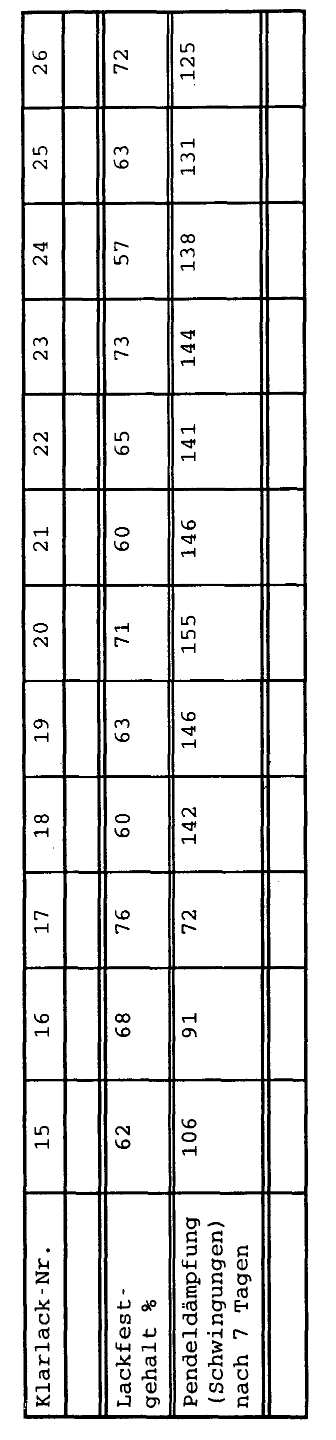

Die erfindungsgemäßen Klarlacke haben bei einer Viskosität von 20 s sehr hohe Festgehalte. Für einen equimolaren Umsatz mit Polyisocyanat sind vergleichsweise geringe Mengen an Polyisocyanat notwendig. Die erhaltenen Beschichtungen haben gute mechanische Eigenschaften, z.B. eine hohe Härte.

### 1-Komponentensystem

Verbindungen A) aus Tabelle 2 wurden entsprechend der Stöchiometrie mit Basonat® HI 100 bzw. Basonat® P LR 8901 gemischt und zur Beschleunigung der Aushärtung vor der Applikation mit 0,1 % (f.a.f) Dibutylzinndilaurat (DBTL, Merck) katalysiert. Die Mischungen enthielten keine Verbindungen bzw. Polymere mit freien, gegenüber Isocyanat reaktiven Gruppen. Die Reaktion der Isocyanatgruppen tritt später ausschließlich mit den verkappten, gegenüber Isocyanat reaktiven Gruppen ein. Die Einstellung auf eine Applikationsviskosität von 20 s (DIN 53 211 Becher 4 mm Auslaufdüse) erfolgte mit Butylacetat. Die Lackfestgehalte wurden nach DIN V 53 216 1. Teil bestimmt, die VOC-Werte aus Masse/ Volumen-Verhältnissen berechnet.

Die Lackfestgehalte sind in Tabelle 4 zusammengefaßt.

**Tabelle 4**

| 1K-Klarlacke | | | | | | | |
|---|---|---|---|---|---|---|---|
| 1K-Klarlack Nr. | 27 | 28 | 29 | 30 | 31 | 32 | 33 |
| aus Produkt-Nr. (Tab 2) | 13 | 13 | 13 | 9 | 12 | 4 | 1 |
| | HDI 5b | HDI 5b | 80 HDI 5b | HDI 2b | HDI 4 | IPDI 2c | IPDI 1 |
| | | | 20 IPDA-Aldimin | | | | |
| Basonat® | HI 100 | LR 8901 | LR 8901 | HI 100 | HI 100 | HI 100 | HI 100 |
| Festgehalt [%] | 74,8 | 78,4 | 80,3 | 75,2 | 71,7 | 72,7 | 76,4 |
| VOC [g/l] | 261 | 221 | 199 | 258 | 297 | 281 | 248 |
| Basonat® LR 8901: Niederviskoser Polyisocyanat (BASF AG) NCO-Gehalt = 20 % IPDA-Aldimin: Vestamin® A 139 (Hüls AG) | | | | | | | |

Aus den Verbindungen A lassen sich durch eine geeignete Wahl der Systempartner Einkomponentenlacke herstellen, die den gesamten Eigenschaftsbereich (von zähelastischen -Lack-Nr.31- bis zu spröd/harten Beschichtungen -Lack-Nr. 33-) abdecken. Die Einkomponentenlacke sind über Monate lagerstabil und zeichnen sich darüberhinaus durch sehr hohe Lackfestgehalte, bzw. sehr niedrige Lösemittelanteile (VOC = volatile organic compounds), aus.

## Patentansprüche

1. Einkomponenten- oder Zweikomponenten-Polyurethanbeschichtungsmassen enthaltend mindestens eine mit Polyisocyanaten reaktionsfähige Reaktivkomponente, dadurch gekennzeichnet, daß es sich bei der Reaktivkomponente um eine Verbindung A) mit einer Isocyanatgruppe, einer Urethan-, Thiourethan oder Harnstoffgruppe und zwei verkappten, mit Isocyanat reaktionsfähigen Gruppen handelt und es sich bei der Verbindung A) um das Additionsprodukt von 1 Mol Dioxolane der Formel 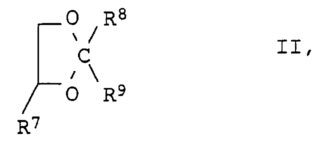 oder Dioxane der Formel 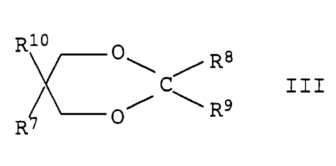 und einem Mol Diisocyanat handelt, wobei R⁸, R⁹ und R¹⁰ unabhängig voneinander für ein H-Atom oder eine C₁-C₁₀-Alkylgruppe stehen und R⁷ für einen aliphatischen oder aromatischen Rest aus 1 bis 30 Kohlenstoffatomen steht, welcher Ethergruppen im Falle des aliphatischen Rests enthalten kann, und zwingend durch eine mit Isocyanat reaktionsfähige Gruppe substituiert ist.

2. Additionsprodukt von einem Mol Diisocyanat und einem Mol des Dioxolans der Strukturformel II.

3. Additionsprodukt von einem Mol Diisocyanat und einem Mol des Dioxans der Formel III.

4. Einkomponenten- oder Zweikomponenten-Polyurethanbeschichtungsmassen, gemäß einem der Anspruch 1, dadurch gekennzeichnet, daß es sich bei 1 bis 100 Gew.-% der Reaktivkomponente um Verbindungen A) handelt.

5. Verwendung der Verbindung A) gemäß einem der Ansprüche 1 bis 3 als Reaktivverdünner für Zweikomponenten-Polyurethanbeschichtungsmassen.

6. Verwendung der Verbindung A) gemäß einem der Ansprüche 1 bis 3 in Einkomponenten-Polyurethanbeschichtungsmassen als Reaktivkomponente für Polyisocyanate.

7. Mit Einkomponenten- oder Zweikomponenten-Polyurethanbeschichtungsmassen gemäß Anspruch 1 beschichtete Substrate.

## Claims

1. A one-component or two-component polyurethane coating composition comprising at least one reactive component capable of reacting with polyisocyanates, wherein the reactive component is a compound A) containing an isocyanate group, a urethane, thiourethane or urea group and two capped isocyanate-reactive groups and the compound A) is the addition product of 1 mol of a dioxolane of the formula 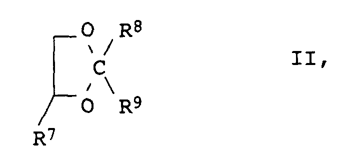 or a dioxane of the formula 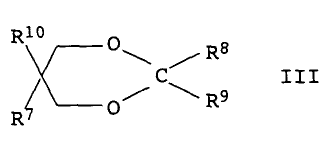 and one mole of diisocyanate, where R⁸, R⁹ and R¹⁰ are, independently of one another, hydrogen or C₁-C₁₀-alkyl and R⁷ is an aliphatic or aromatic radical comprising 1 to 30 carbon atoms which, in the case of the aliphatic radical, can contain ether groups, and must be substituted by a group capable of reacting with isocyanate.

2. An addition product of one mole of diisocyanate and one mole of the dioxolane of the structural formula II.

3. An addition product of one mole of diisocyanate and one mole of the dioxane of the formula III.

4. A one-component or two-component polyurethane coating composition as claimed in claim 1, wherein from 1 to 100% by weight of the reactive component is made up by compounds A).

5. The use of the compound A) as claimed in any of claims 1 to 3 as reactive diluent for two-component polyurethane coating compositions.

6. The use of the compound A) as claimed in any of claims 1 to 3 in one-component polyurethane coating compositions as reactive component for polyisocyanates.

7. A substrate coated with a one-component or two-component polyurethane coating composition as claimed in claim 1.

## Revendications

1. Masses de revêtement à base de polyuréthanne à un ou deux composants contenant au moins un composant susceptible de réagir avec des polyisocyanates, caractérisées en ce que, quant au composant réactif, il s'agit d'un composé A) ayant un groupe isocyanate, un groupe uréthanne, thiouréthanne ou urée et deux groupes coiffés, susceptible de réagir avec un isocyanate et quant au composé A), il s'agit du produit d'addition d'une mole de dioxolannes de formule 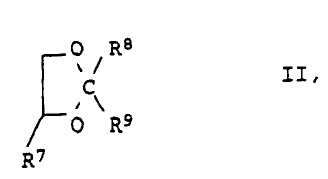 ou de dioxannes de formule 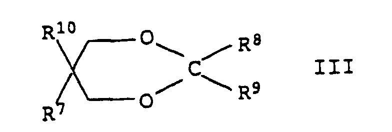 et d'une mole de diisocyanate, R⁸, R⁹ et R¹⁰ représentant indépendamment l'un de l'autre, un atome de H ou un groupe alkyle en C₁ à C₁₀ et R⁷ représente un résidu aliphatique ou aromatique constitué de 1 à 30 atomes de carbone, lequel peut contenir des groupes éthers dans le cas du résidu aliphatique et qui est obligatoirement substitué par un groupe susceptible de réagir avec un isocyanate.

2. Produit d'addition d'une mole de diisocyanate et d'une mole du dioxolanne de formule développée II.

3. Produit d'addition d'une mole de diisocyanate et d'une mole de dioxanne de formule III.

4. Masses de revêtement à base de polyuréthanne à un ou deux composants, selon la revendication 1, caractérisées en ce qu'il s'agit de composés A) à raison de 1 à 100% en poids du composant réactif.

5. Utilisation du composé A) selon l'une des revendications 1 à 3, en tant que diluant réactif pour des masses de revêtement à base de polyuréthanne, à deux composants.

6. Utilisation du composé A) selon l'une des revendications 1 à 3, dans des masses de revêtement à base de polyuréthanne, à un composant, en tant que composant réactif pour les polyisocyanates.

7. Substrats revêtus de masses de revêtement à base de polyuréthanne, à un ou deux composants selon la revendication 1.
